# EUROPEAN PATENT APPLICATION

(11) **EP 1 936 382 A1**
(43) Date of publication of application: **25.06.2008**
(21) Application number: 06783269.1
(22) Date of filing: 11.09.2006
(51) Int. Cl.: G01N 35/08, G01N 37/00

(54) **MICROCHANNEL CHIP**

(30) Priority: 13.09.2005 JP 2005007535 U
(71) Applicant: Metaboscreen Co., Ltd., Yokohama-shi Kanagawa 231-0855 (JP)
(72) Inventor: SEKIZAWA, Ryuichi, Yokohama-shi Kanagawa 231-0855 (JP); HISAMOTO, Hideaki, Ako-gun Hyogo 678-1205 (JP)
(74) Representative: Kloiber, Thomas
(86) International application number: PCT/JP2006/317996
(87) International publication number: WO 2007/032316

(57) **Abstract**

A micro flow channel chip of the present invention has multiple grooves formed on a substrate to be connected with each other in parallel or in series and capillaries, chemically-modified in a manner different from each other, laid in the multiple grooves, wherein detected data can be obtained by supplying a fluid to the capillaries laid in the multiple grooves. The micro flow channel chip enables multiple items of chemical and biochemical functions to be measured simultaneously. The micro flow channel chip enables multiple items of chemical and biochemical functions to be measured simultaneously using micro flow channels formed on the substrate.

## Description

### Technical Field

The present invention relates to a micro flow channel chip capable of detecting data upon flowing a fluid through multiple micro capillaries and performing prescribed functions with chemical-modification at the capillaries.

### Background Art

Integrated chips called µTAS (Micro Total Analysis Systems) are conventionally known as an example of chips having micro flow channels formed on a glass or plastic substrate with the use of micromachining technology to perform necessary biochemical / chemical operation and detection such as reaction and separation using functionalized molecules secured to the flow channel.

As another example of such micro flow channel chips having the micro flow channels formed on the substrate, capillary gel electrophoresis micro chips are known that are used when separating nucleic acid such as fragments of DNA, organic molecule such as amino acid, peptide, and protein, and metal ion in various sizes in micro scales. (see, Patent Reference 1)

Furthermore, micro flow channel devices are also conventionally known that have flow channel grooves of a prescribed width and depth formed in a grid pattern on a surface of a substrate, rectangular capillaries laid in some of the flow channel grooves in close contact therewith, and a transparent cover made of transparent glass covering the surface of the substrate of the side of the flow channel grooves. (see, Patent Reference 2) The use of such micro flow channel devices is easy as well as inexpensive, and enables flow channel patterns to be changed easily and freely.

Patent Reference 1 : Japanese Unexamined Patent Application Publication No. 2001-157855
Patent Reference 2 : Japanese Unexamined Patent Application Publication No. 2005-140681

### Disclosure of Invention

### Problems to be solved by the Invention

Chips such as the capillary gel electrophoresis micro chip and the µTAS as described above require the micromachining technology such as wet etching and may result in a high cost when a flow channel pattern is once formed and thereafter the formed flow channel pattern is changed, thus lacking flexibility in arrangement of the flow channel pattern.

The technology disclosed in Patent Reference 2 as described above can easily and freely change the flow channel pattern to enable chemical functions to be integrated as necessary, but it is generally expected to greatly shorten a time until collecting detected data by simultaneously measuring multiple items, for example, in virus examination as an application of chemical field and biochemical field. Patent Reference 2, however, does not specifically disclose the data collection.

The present invention is made in consideration of such technical problems as described above, and it is the object of the present invention to provide a micro flow channel chip capable of simultaneously measuring multiple chemical and biochemical functions with the use of a micro flow channel formed on a substrate.

### Means for Solving the Problem

In order to solve the problems as described above, the micro flow channel chip of the present invention has multiple grooves formed on a substrate to be connected in parallel or in series and capillaries, each of which is chemically-modified in a manner different from each other, laid respectively in the multiple grooves to collect detected data upon a fluid being supplied to the thus laid multiple capillaries.

The micro flow channel chip of the present invention has the capillaries laid in the preformed grooves on the substrate to result in an adaptive structure capable of replacing the capillaries to cope with a situation such as where examination items are replaced. Furthermore, it is supposed that each of the capillaries is chemically-modified in a manner different from each other, and the micro flow channel chip can simultaneously measure multiple chemical and biochemical functions without interference between each of the capillaries.

In the micro flow channel chip of the present invention, "chemically-modified in a different manner" as used herein has a broad meaning, and realizes chemical operations such as mixing, reaction, and separation in broad fields such as biochemical field, pharmaceutical field, environmental measurement field, and molecular biological field without being limited to chemical field. For example, the micro flow channel chip of the present invention enables simultaneous detection and simultaneous quantity detection in antigen-antibody reaction by arranging capillaries side by side having various types of animal immunoglobulin G (IgG) antibodies secured thereto.

A fluid is supplied to the multiple capillaries laid in the grooves so that chemical operations such as reaction, separation, and mixing are performed simultaneously, and for example, the introduction of a fluorescent substrate in ELISA method enables quantity determination and quantity detection. ELISA (Immuno-Assay or Enzyme-Linked Immuno Sorbent Assay) is a method for determining the concentration of a substance to be examined (examined substance) by simultaneously applying the examined substance and an enzyme-labeled antigen to a micro plate having an antibody (protein) secured thereto specifically reacting with the examined substance to cause the examined substance and an enzyme-labeled antigen to react therewith and measuring with absorptiometric method the enzyme activity of an enzyme-labeled substance bonded with the plate, and is a method for quantity detection by analyzing simultaneously or consecutively a light transmitted through or reflected by the multiple capillaries arranged side by side. In the analysis, the micro flow channel chip of the present invention can be configured to obtain data via image processing using a thermal lens microscope, a fluorescent microscope, a CCD camera, and the like. Furthermore, the antigen may be secured to the capillary.

### Advantage of the Invention

With the micro flow channel chip of the present invention, multiple chemical and biochemical functions can be measured simultaneously with the use of the micro flow channel formed on the substrate, and thus, a work originally requiring many chemical operations such as virus identification and the like can be performed in a very short time, and the work can be proceeded with very economically due to the structure of the chip capable of being mass-produced.

### Brief Description of Drawings

Fig. 1 is a cross-sectional perspective diagram of an essential portion of a micro flow channel chip according to an embodiment of the present invention.
Fig. 2 is a plan diagram of a capillary used in the micro flow channel chip according to the embodiment of the present invention.
Fig. 3 is a cross-sectional perspective diagram of the capillary used in the micro flow channel chip according to the embodiment of the present invention.
Fig. 4 is a schematic diagram of a substrate used in the micro flow channel chip according to the embodiment of the present invention.
Fig. 5 is a schematic perspective diagram of the substrate used in the micro flow channel chip according to the embodiment of the present invention.
Fig. 6 is a plan diagram of the substrate used in the micro flow channel chip according to the embodiment of the present invention before the capillary is laid in the grooves.
Fig. 7 is a plan diagram of the substrate used in the micro flow channel chip according to the embodiment of the present invention after the capillary is laid in the grooves.
Fig. 8 is a schematic diagram for explaining steps for coating the capillary with a prescribed reagent in the micro flow channel chip according to the embodiment of the present invention.
Fig. 9 is a schematic diagram for explaining steps of reaction process with the use of the prescribed reagent at the capillary of the micro flow channel chip according to the embodiment of the present invention.
Fig. 10 is a schematic diagram of a model for explaining a measuring method according to ELISA method with the micro flow channel chip according to the embodiment of the present invention.
Fig. 11 is a diagram showing signal strengths of five capillaries when the micro flow channel chip of Fig. 10 is used.
Fig. 12 is a schematic diagram of a model using a fluorescein releasing capillary of the micro flow channel chip according to the embodiment of the present invention.
Fig. 13 is a diagram showing a relationship between measured pH value and fluorescence strength of the model of Fig. 12.
Fig. 14 is a diagram showing that a substrate releasing capillary capable of being used for measuring enzyme activity functions as the micro flow channel chip, and is the diagram showing data of enzyme activity measured with the substrate releasing capillary of the embodiment of the present invention.
Fig. 15 is a diagram showing that a substrate releasing capillary capable of being used for measuring enzyme activity functions as the micro flow channel chip, and is the diagram showing data of an assay using a microtiter plate as a comparative example.
Fig. 16 is a diagram showing a fluorescent image showing a state in the capillary after the reagent is released as an experimental example of the micro flow channel chip according the embodiment of the present invention, and is the diagram showing the fluorescent image of a trypsin substrate releasing capillary.
Fig. 17 is a diagram showing a fluorescent image showing a state in the capillary after the reagent is released as an experimental example of the micro flow channel chip according the embodiment of the present invention, and is the diagram showing the fluorescent image of a fluorescein releasing capillary.
Fig. 18 is a diagram showing a calibration curve for antigen concentrations of not only human IgG but also chicken IgG and goat IgG using the model of Fig. 10.

### Best Mode for Carrying Out the Invention

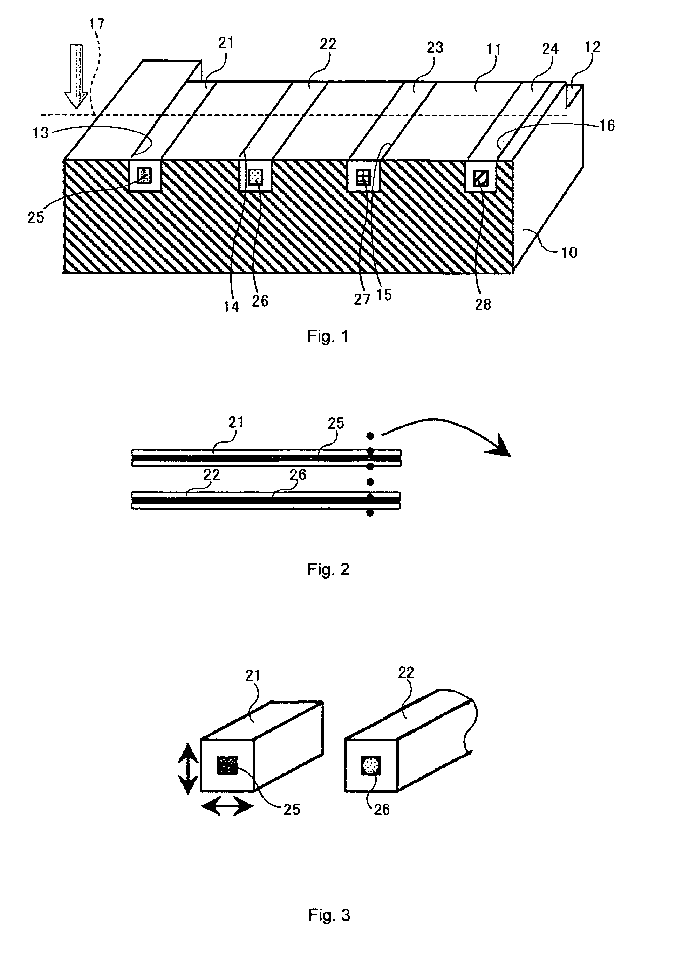

The micro flow channel chip according to the embodiment of the present invention is described with reference to the figures. Fig. 1 is a cross-sectional diagram of an essential portion of a micro flow channel chip according to an embodiment of the present invention. The micro flow channel chip uses a substrate 10 made of polydimethylsiloxane (PDMS), a polymeric material substrate, and has capillaries 21 to 24 in a rectangular pillar form respectively laid in four grooves 13 to 16 formed on a surface 11 of the substrate 10 as shown in Fig. 1. One end of each of the four capillaries 21 to 24 is formed facing a flow channel 12.

The substrate 10 may have grooves arranged in a grid pattern as disclosed in Patent Reference 2 described above, or alternatively, as many grooves as the capillaries may be formed on the substrate 10 to accommodate many types of the capillaries laid in the grooves. Although the substrate 10 is tabular in the embodiment, the substrate 10 may be in other forms capable of holding the capillaries. The substrate 10 made of polymeric material is flexible to a certain extent. Accordingly, the capillary can be inserted into the groove by expanding to some extent the groove accommodating the capillary inserted therein when the capillary is to be laid in the capillary, and the capillary can be held in the groove without any gap after the capillary is laid in the groove. For example, the substrate can be comprised of silicone rubber such as polydimethylsiloxane (PDMS) and polydiphenylsiloxane, glass, or other polymeric material.

Herein, the groove may have the dimension of, for example, approximately 300 micron in width and 300 micron in depth to have a cross section in a form of a very small square, and accordingly, the capillary has a side surface and a bottom surface of the same dimension due to the square cross section, thus capable of being laid in the groove without a problem of the direction as to which is the side surface and which is the bottom surface. On the other hand, the flow channel in the capillary is 100 micron by 100 micron, and the outer diameter of the capillary is 300 micron by 300 micron to be the same size as the groove.

The four capillaries 21 to 24 in a rectangular pillar form laid in the grooves 13 to 16 as described above are flexible micro rectangular pillar members made of silica glass chemically-modified in different manners to have different chemical functions, and the four capillaries 21 to 24 have flow channels 25 to 28 in the rectangular pillar form inside thereof. Substances causing reaction such as antibody and enzyme are secured to the interior wall of the flow channels 25 to 28.

For example, in a case where the fluid flowing through the flow channel is human blood, a reagent for AIDS examination is secured to the first capillary, a reagent for hepatitis examination is secured to the next capillary, and other capillaries can be used for, e.g., cancer and sexual disease examinations. The micro flow channel chip of the present invention has the same blood flow through four different capillaries as described above, and thus makes independent examinations for each of the four diseases unnecessary, that is, the examination should be performed for only once to determine as to whether positive or negative, and thus, the micro flow channel chip of the present invention is very effective especially in cases where an urgent treatment is required. As examples of combinations of the capillaries, the capillaries can be a combination for simultaneously examining multiple types of hepatitis, and in cases where various types of diseases exist such as virus, the capillaries can be a combination for examining the diseases to determine at a time as to which type of the diseases. As examples of using blood, each of the capillaries can be arranged to simultaneously perform examinations of, for example, hyperlipidemia, diabetes, and fatty liver. Body fluids such as urine and blood can be used in the multiple capillaries to simultaneously perform multiple examinations such as examinations for bladder cancer, prostate cancer, uterine cancer, or doping test. The micro flow channel chip of the present invention can be applied for identification and quantity detection of cytokine, hormone, environmental hormone, and the like. As examples of application to the field of food, the micro flow channel chip of the present invention can be used to detect agrichemical and bacillus in foods and to detect the quantity thereof, and can identify toxic substances. In the field of biochemistry, the micro flow channel chip of the present invention can realize component analysis of various molecules in a cell such as various proteins, nucleic acid, and physiologically active substance, and also can realize detecting the activity of various enzymes in a cell and detecting the quantity thereof. Further, the capillaries can be a combination for detecting the quantity of multiple metal ions included in mineral water such as hot spring.

The micro flow channel chip of the present invention can perform detection according to ELISA method as hereinafter described, and has a structure in which an antibody is secured to the inner surface of the four capillaries 21 to 24 in the rectangular pillar form and an antigen solution is supplied to cause antigen-antibody reaction to realize quantity detection, thus being especially effective in cases of disease examination and virus examination.

Fig. 2 and Fig. 3 are a plan diagram and a cross-sectional diagram, and the capillaries 21 and 22 have the flow channel 25 and 26 in the rectangular pillar form inside thereof for different chemical modifications. The capillaries 21 and 22 are made of silica glass in the present embodiment, but can be made of other glass and synthetic resin material. In the present embodiment, the inner wall is formed to have a cavity in the rectangular pillar from, but a cavity may be in a cylinder form or other forms. The inner wall of the capillaries may be chemically-modified to be made a chemically-modified portion for ion-sensing, molecular sensing, pH sensing, filtering, concentration, antigen-antibody reaction, enzyme reaction, catalytic reaction, immune reaction, oil-water separation, or flow control. In such cases, many types of chemical functions such as molecular recognition, reaction, separation, and detection can be freely integrated into a piece of the micro flow channel tip. The capillaries are, for example, made of glass or plastic. As an example of the former, Square Flexible Fused Silica Capillary Tubing sold by Polymicro Technologies, LLC made of silica glass and having a square outer cross section is used. Since the capillaries in the rectangular form as described above have the square outer cross section, the grooves having the square cross section and having the same size as the outer form of the capillaries are arranged on the substrate, and a prescribed number of the capillaries cut to a prescribed length are laid in some portion of the grooves, and thus, the micro flow channel is made into a desired pattern easily and freely.

Preferably, the capillaries of the micro flow channel chip of the present invention has at least one transparent surface thereof. With the transparent surface, proceedings and results of chemical operation at the micro flow channels can be easily seen, and the transparent surface is preferable for quantity detection according to ELISA method as hereinafter described. It should be noted that the cross-sectional form of the inner wall of the capillary is not limited to a specific form, but is preferred to be a substantially rectangular form in consideration of ensuring chemical functions as described above.

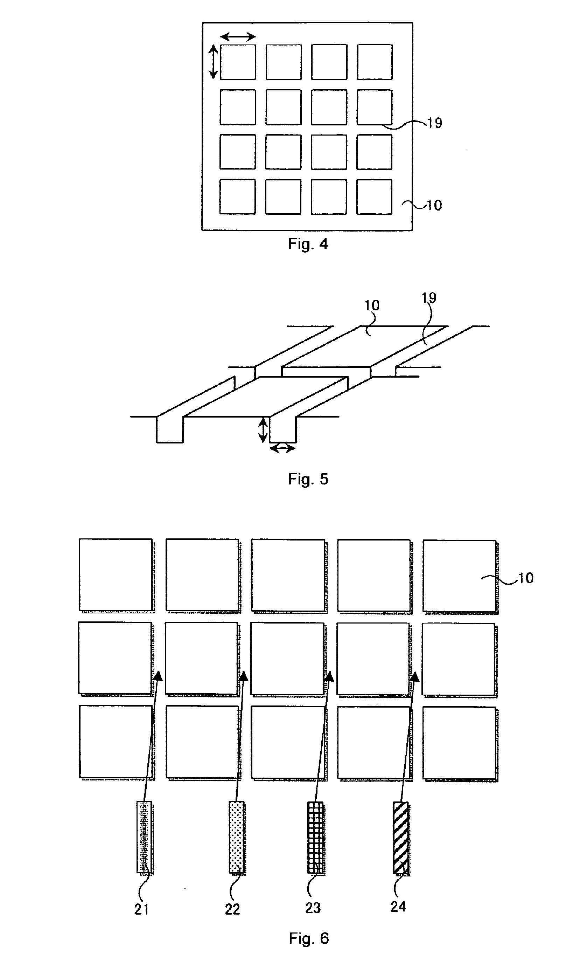

Subsequently, assembly of the micro flow channel chip according to the embodiment of the present invention is hereinafter described with reference to Figs. 4 through 7. Fig. 4 and Fig. 5 are diagrams showing a relationship between the substrate 10 and a groove 19 being the flow channel, and Fig. 4 is a plan view omitting some portion whereas Fig. 5 is a perspective diagram. As shown in Fig. 4 and Fig. 5, the substrate 10 made of polymeric material such as glass and polydimethylsiloxane (PDMS) has the groove 19 formed lengthwise and crosswise in a grid pattern and a surface surrounded by the groove 19 in a square matrix form protruding from a groove bottom portion. Since the groove 19 is formed lengthwise and crosswise in the grid pattern, the distance between crossings on one of the grooves in a crosswise direction and the distance between crossings on one of the grooves in a lengthwise direction are substantially constant, but the distance between crossings in the crosswise direction and the lengthwise direction can be changed.

Using the substrate 10 as described above, the four types of the capillaries 21 to 24 are prepared as shown in Fig. 6, and each of the four types of the capillaries 21 to 24 is laid in a portion of the groove in the lengthwise direction to be parallel with each other. Dummy capillaries 18 for closing the flow channel are laid in portions of the groove that need to be blocked. For example, a prescribed number of the flexible rectangular capillaries are cut into a prescribed length and has the flow channels thereof filled with PDMS and the like to be used as the dummy capillaries 18. The dummy capillaries as described above laid in the flow channels block a specific portion of the low channels, and thus, the flow channel of the micro flow channel chip is made into a prescribed pattern.

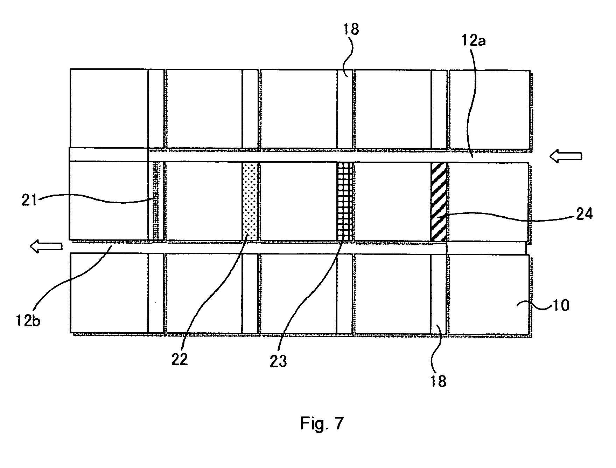

In the flow pattern as shown in Fig. 7, the four types of the capillaries 21 to 24 are arranged in parallel in the crosswise direction, and a fluid introduced from an inlet side of the flow channel 12a made of the groove flows through each of the capillaries 21 to 24 and is discharged via an exit side of the flow channel 12b. Where two or more different types of fluids are introduced, the flow channel 12a can be opened at two locations or more to introduce the fluids.

Although omitted in the figures, a prescribed cover may be attached on the substrate after the capillaries are laid in the grooves. A transparent sheet or transparent film made of glass or plastic can be employed as the cover, and an internal state of the micro flow channel can be observed from outside in such cases.

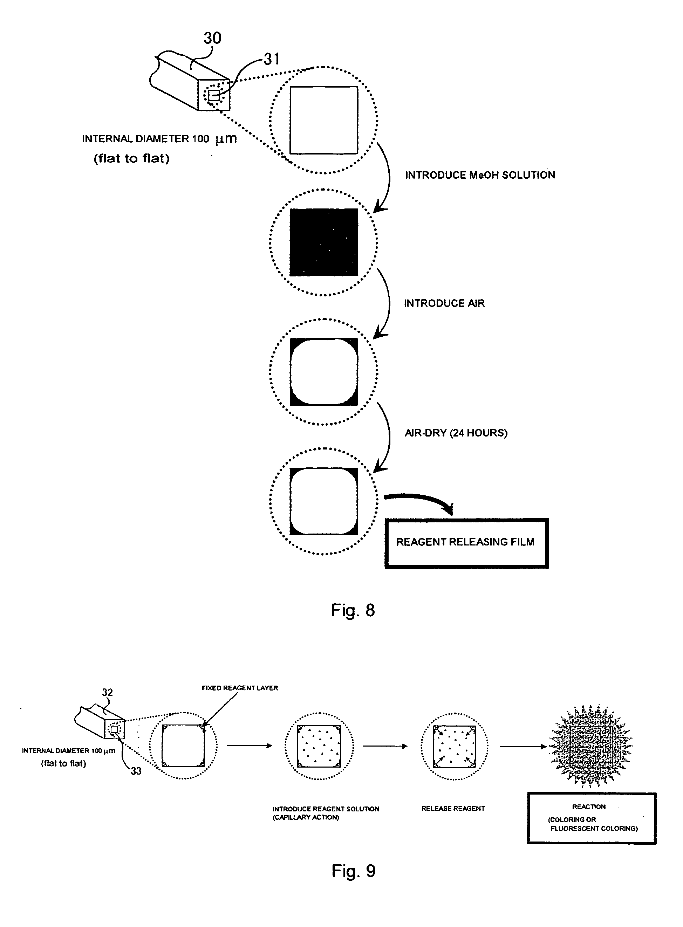

Subsequently, steps for preparing the capillary having a reagent secured thereto are briefly described with reference to Fig. 8. In the example of Fig. 8, a substance functioning as the reagent is dissolved in a methanol (MeOH) solution, and this solution is injected into the flow channel 31 of the capillary 30 having the square cross section. After air is filled, the solution injected into the flow channel 31 having the square cross section holds air in the middle thereof, and upon 24 hours of air-drying, the solution is secured to the inner wall of the capillary 30. As an example of the capillary releasing a reagent, a fluorescence detection trypsin substrate (benzoyl-L-arginine 4-methyl-coumaryl-7-amide;Bz-Arg-MCA) or a pH detection reagent (fluorescein) and a polyethylene glycol are dissolved in the methanol (MeOH) solution, and the solution is introduced into the capillary 30 of the flow channel 31, so that the solution can be secured to the inner wall of the capillary 30 after 24 hours of air-drying.

For example, in order to obtain the capillary 30 capable of performing detection according to ELISA method, the antibody is preferred to be previously secured to the inner wall of the flow channel 31 having the square cross section, and diagnosis according to ELISA method can be achieved by successively supplying an antigen, an enzyme-labeled antibody, and a substrate as hereinafter described.

Fig. 9 shows states of the capillary 32 during detection operation. In the capillary 32, a film made by securing a reagent is formed on the inner wall of the flow channel 33 having the square cross section according to steps such as the steps described in Fig. 8, and especially, components of the reagent exist at four corner portions of the capillary 32 just like a residual after drying. In this state, a solution to be a sample is introduced to the capillary 32 by capillary action. The sample is introduced into the flow channel 33 of the capillary 32 having the square cross section to allow the reagent to be released from the film having the reagent secured therein, thus resulting in a phenomenon of a prescribed reaction, for example, coloring, fluorescence, and the like.

Fig. 9 shows an example in which the reagent is released from the film formed on the inner wall, and there are examples of a coloring reaction caused by chemical reaction and a coloring reaction caused by the substrate released from the inner wall of the flow channel 33 of the capillary 3 having the square cross section such as enzyme reaction. In a case of enzyme reactions, the capillary releasing the substrate and the enzyme itself can be employed.

The micro flow channel chip of the present invention is hereinafter further described in detail based on the experimental example performed by the inventor of the present invention.

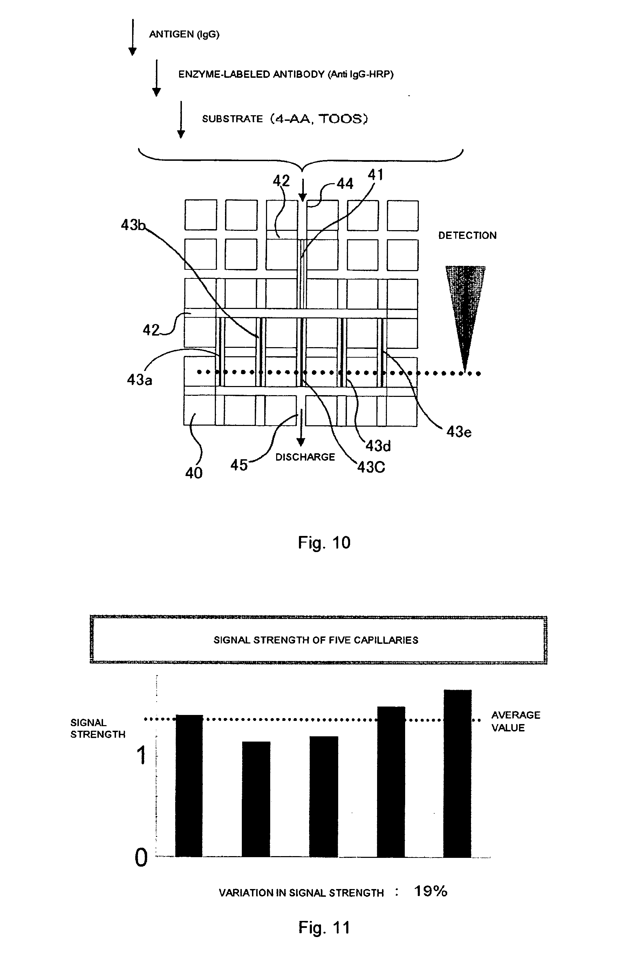

Fig. 10 shows a model for a measuring method according to ELISA method, and is an example in which enzyme reaction was analyzed with a human IgG reaction system. First, the grooves are formed in the lattice form on the substrate 40, and the five rectangular capillaries 43a to 43d and 43e are laid in parallel thereon. The dummy capillaries 42 are attached on the grooves that are not used as the flow channels. A bulb capillary 41 made of poly (N-isopropyl acrylic amide), a temperature sensitive polymer, is formed at the inlet of the five parallel rectangular capillaries 43a to 43d and 43e. The bulb capillary 42 can control opening and closing of the flow channel depending on temperature.

On the micro flow channel chip structured as described above, the five rectangular capillaries 43a to 43d and 43e having a human IgG antibody secured thereto were laid in parallel to make the tip. For testing, after the bulb capillary 41 was operated to be opened, an antigen solution was introduced from an inlet 44 to fill each of the rectangular capillaries 43a to 43d and 43e themselves while the antigen solution was allowed to be discharged via an outlet 45, and subsequently, the bulb capillary 41 was closed to allow the reaction to proceed. Subsequently, an enzyme-labeled antibody solution (Anti-IgG-HRP) and a substrate solution (TOSS, 4-AA) generating red pigments were subjected to reaction and observed with a thermal lens microscope (excitation wavelength 532nm, detected wavelength 658nm).

Upon introducing the antigen and enzyme antibody solution and introducing the substrate solution, the enzyme reaction proceeded to caused a thermal lens microscope signal strength to reach a constant value in approximately 60 seconds. Subsequently, a time to adequately complete the antigen-antibody reaction in this system was surveyed. Consequently, where the antigen-antibody reaction was performed for 12 minutes or more, the thermal lens signal strength became constant. Therefore, a total reaction time in the antibody secured capillary is approximately 30 minutes, and accordingly, it turns out that a rapid immunoassay can be performed.

Fig. 11 shows signal strengths of five capillaries when the micro flow channel chip of Fig. 10 is used. Approximately 19 % deviation was observed among the signal strengths, but it is proved that useful data can be obtained.

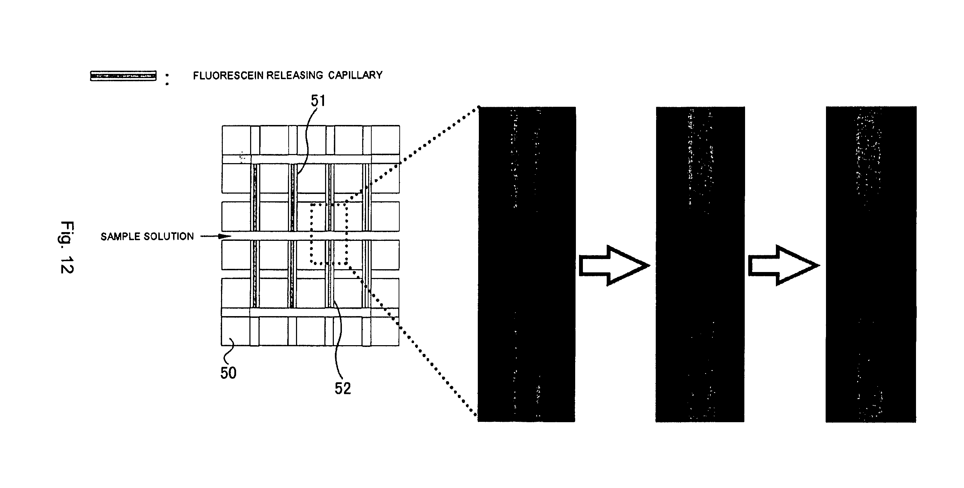

Fig. 12 is a diagram showing an experimental example of a model using a fluorescein releasing capillary. The central groove on the substrate 50 is structured to be provided with a sample solution of which pH value should be measured, and central-side ends of fluorescein releasing capillaries 51 and 52 arranged on both sides of the central groove are open to allow the sample solution to be introduced via the openings into the fluorescein releasing capillaries 51 and 52.

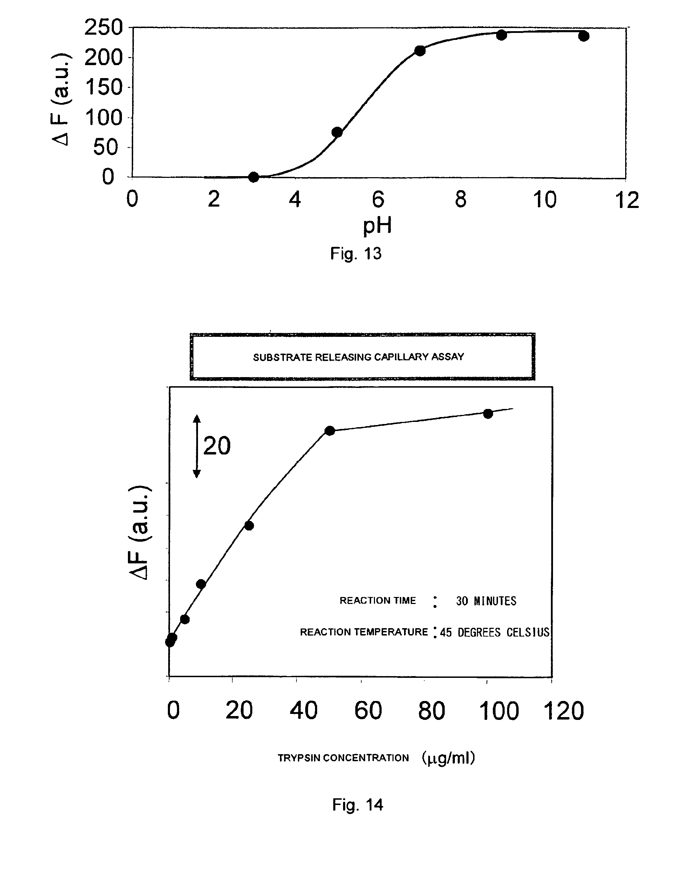

A picture portion in Fig. 12 shows actual fluorescence over time, and Fig. 13 shows a relationship between a fluorescence strength 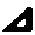 F and a pH value. With the use of the fluorescein releasing capillary, a change in strength adequately appears at pH value of 4 to 8, and accordingly, it is proved that detected data is useful.

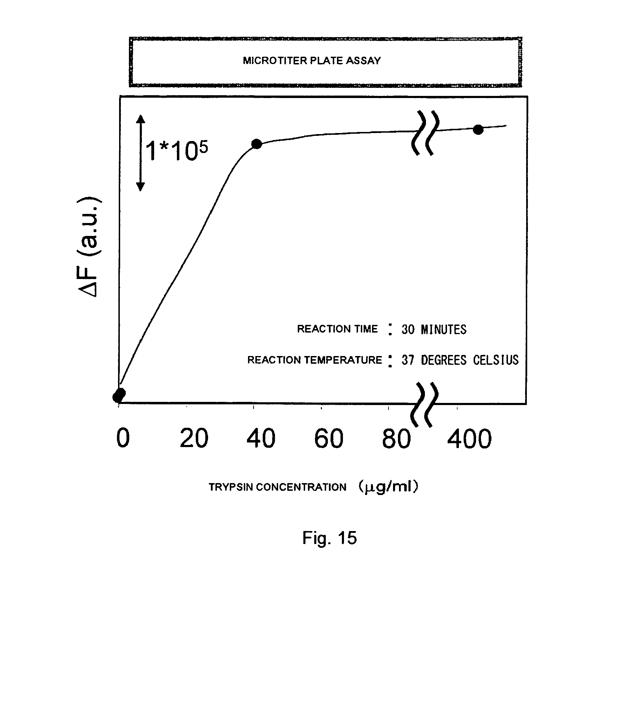

Figs. 14 and 15 are diagrams showing that a substrate releasing capillary capable of being used for measuring enzyme activity functions as the micro flow channel chip, and Fig. 14 is data of enzyme activity measured by the substrate releasing capillary according to the experimental example of the present invention, whereas Fig. 15 is data measured by the assay using a microtiter plate as a comparative example.
In the assay using the substrate releasing capillary, signals are weaker, but regarding the trypsin concentration, the obtained data is adequately of the same grade as the assay using the general microtiter plate with respect to reaction speed and reaction temperature, and the assay using the substrate releasing capillary can be made smaller than the assay using the microtiter plate to enable operations to proceed very inexpensively.

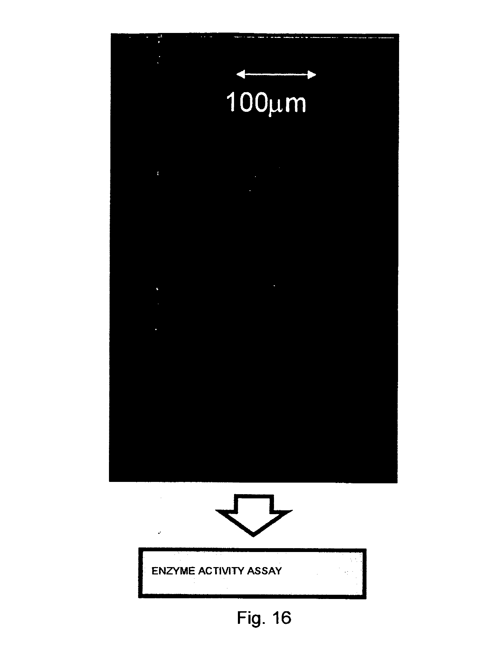

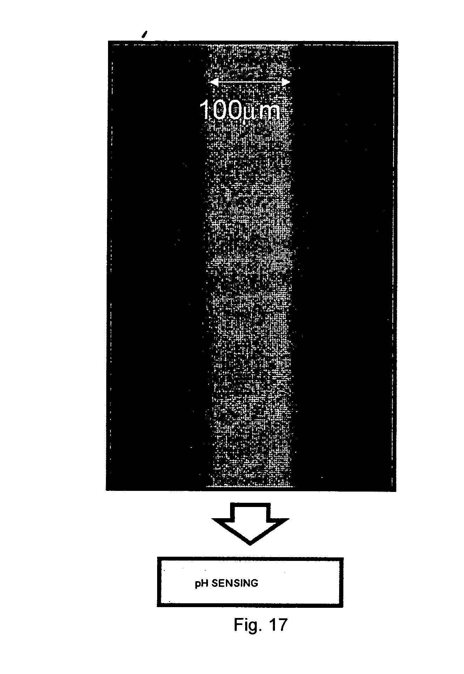

Figs. 16 and 17 are fluorescent microscope pictures respectively of enzyme activity assay and pH sensing, and the enzyme activity assay uses the trypsin substrate releasing capillary, whereas the pH sensing is an example of a model using the fluorescein releasing capillary. In both cases, fluorescence is observed in a width of approximately 100 micron that is the same width as the width of the inner wall of the flow channel of the substantially rectangular capillary, and thus, an effective measuring is realized.

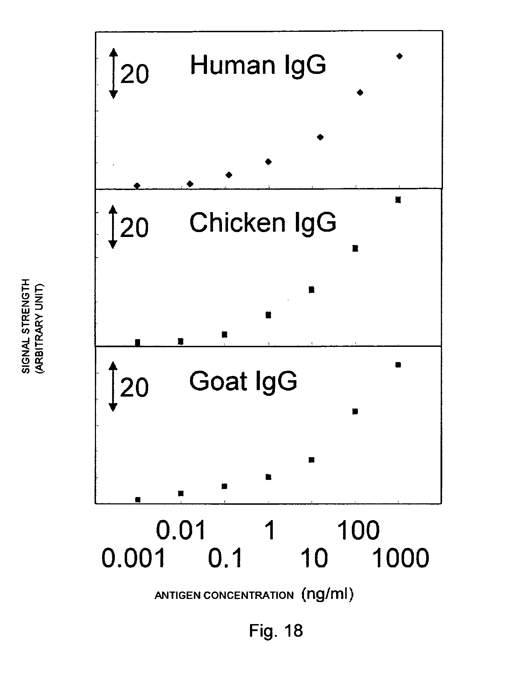

Fig. 18 is a diagram in which calibration curves for the antigen concentration are drawn with respect to not only the human IgG but also a chicken IgG and a goat IgG with the use of the model shown in Fig. 10. In these immunoassays, the antigen-antibody reactions are caused in the same manner as the reaction system of the human IgG as described above, and it is proved that the same result of measured quantity is obtained. Accordingly, the micro flow channel chip of the present invention arranging different types of capillaries even for different enzyme reactions and antigen-antibody reactions to perform measurement simultaneously is proved to be effective.

Although an example of different types of capillaries arranged in parallel corresponding to different enzyme reactions and antigen-antibody reactions is described in the above embodiment, a liquid supplied to each of the capillaries has only to have something in common, and each of the capillaries may be connected with each other in series.

## Claims

1. A micro flow channel chip comprising:
a plurality of grooves formed on a substrate to be connected with each other in parallel or in series; and
a plurality of capillaries chemically-modified in a manner different from each other and respectively laid in the plurality of grooves,
wherein detected data is obtained by supplying a fluid to the plurality of capillaries laid in the plurality of grooves.

2. The micro flow channel chip according to claim 1, wherein any one of the plurality of capillaries is an antibody-secured capillary having an antibody secured on an inner wall of the capillaries.

3. The micro flow channel chip according to claim 1, wherein any one of the plurality of capillaries is an antigen-secured capillarys having an antigen secured on an inner wall of the capillaries.

4. The micro flow channel chip according to claim 1, wherein both ends of any one of the plurality of capillaries are sealed with a silicone oil after the fluid is introduced to the any one of the plurality of capillaries.

5. A micro flow channel chip comprising:
a plurality of grooves formed on a substrate to be connected with each other in parallel or in series; and
a plurality of capillaries having an antibody secured thereto and respectively laid in the plurality of grooves,
wherein detected data is obtained by supplying an antigen solution to the plurality of capillaries laid in the plurality of grooves.

6. A micro flow channel chip comprising:
a plurality of grooves formed on a substrate to be connected with each other in parallel or in series; and
a plurality of capillaries having an antigen secured thereto and respectively laid in the plurality of grooves,
wherein detected data is obtained by supplying an antibody solution to the plurality of capillaries laid in the plurality of grooves.

7. The micro flow channel chip according to either claim 1, 5, or 6, wherein a coloring reaction is caused at any one of the plurality of capillaries according to ELISA method, and wherein the detected data is obtained from a coloring density thereof.
